# EUROPÄISCHE PATENTANMELDUNG

(11) **EP 1 847 934 A1**
(43) Veröffentlichungstag der Anmeldung: **24.10.2007**
(21) Anmeldenummer: 07004485.4
(22) Anmeldetag: 05.03.2007
(51) Int. Cl.: G06F 17/00

(54) **Mobiles elektronisches Endgerät, Informationssystem und Verfahren zur Korrelation von Suchergebnissen mit einem Bezahlvorgang**

(30) Priorität: 20.04.2006 DE 102006018299
(71) Anmelder: Vodafone Holding GmbH, 40213 Düsseldorf (DE)
(72) Erfinder: Hertle, Jochen, Dr., 85521 Ottobrunn (DE)
(74) Vertreter: Müller, Thomas

(57) **Zusammenfassung**

Es liegt das Problem vor, Zahlungsvorgänge die von einem mobilen elektronischem Endgerät, insbesondere Mobiltelefon, auf Websites von Dritten getätigt werden, zu erfassen. Die Anmeldung schlägt hierzu vor, Suchergebnisse von einer Website mittels einer Komperatoreinrichtung auf dem mobilen Endgerät mit einer von einem externen Leser gelesenen Identifikatorkennung zu vergleichen und somit eine Korrelation zwischen den Suchergebnissen und dem Bezahlvorgang durchzuführen.

## Beschreibung

Die vorliegende Erfindung betrifft ein mobiles elektronisches Endgerät, insbesondere ein Mobiltelefon, mit einer Schnittstelle zur Verbindung zu einer Rechnereinheit in einem Kommunikationsnetz, mit einer Eingabeeinrichtung zur Erzeugung einer Suchanfrage, die über die Schnittstelle an die Rechnereinheit übertragen wird oder übertragbar ist, mit einer Anzeigeeinrichtung zur Darstellung von von der Rechnereinheit erzeugten und übertragenen Suchergebnissen, mit einer auf dem Endgerät implementierten Bezahlfunktionalität und mit einer Einrichtung zum Aufbau einer Verbindung zwischen dem Endgerät und einem externen elektronischen Schreib/Lesegerät.
Ferner betrifft die Erfindung ein Informationssystem und ein Verfahren zum Korrelieren von aufgrund einer Suchanfrage eines mobilen elektronischen Endgeräts erzeugten Suchergebnissen mit einem Bezahlvorgang in einem Geschäft.

Es ist das so genannte Ranking für Suchanfragen im Internet bekannt. Beispielsweise vermarktet der Betreiber der Internet-Plattform Google ein Ranking von Suchergebnissen. Aufgrund der Suchergebnisse werden Kunden direkt zu Internetshops gelenkt, welche das über die Suchanfrage eingegebene Produkt anbieten. Für die Vermittlung von Kundenkontakten erhält der Betreiber von Google Kommissionserlöse. Diese Erlöse sind zum Teil an das Ranking des Suchergebnisses gekoppelt. D.h., ein Suchergebnis welches in der Suchergebnisliste ganz oben erscheint, ist für den Internetshopbetreiber mehr wert, als das Erscheinen des Links zu seinem Internetshop an einer hinteren Stelle in der Suchergebnisliste. Entsprechend einer aufsteigenden Position des Links zu seinem Internetshop zahlt der Internetshopbetreiber höhere Summen an den Betreiber von Google.

Des Weiteren gibt es mobile Suchmaschinen, die ähnlich wie bei Google Suchergebnisse zu Suchanfragen auf ein mobiles elektronisches Endgerät, insbesondere ein Mobiltelefon oder ein Smartphone, übertragen. Dies ist bei internetfähigen Mobiletelefonen mittels des WAP-Protokolls (WAP = Wireless Application Protocoll) möglich, wobei das WAP-Protokoll einen Standard für die Bereitstellung von text- und grafikbasierten Informationen und Diensten für mobile elektronische Endgeräte definiert. WAP nutzt bestehende Internet-Architekturen und bietet eine Schnittstelle für mobilfunkorientierte Anwendungen. Mit einem WAPfähigen Mobiltelefon ist über das Internet der Zugriff auf in WML (WML = Wireless Markup Language) programmierte Seiten möglich.

Ferner ist bekannt Mobiltelefone als elektronische Geldbörsen zu nutzen. Das Mobiltelefon dient dabei beispielsweise als Geldkarte oder Kreditkarte. Zur Sicherheit kann die Bezahlfunktion mit einem Passwort oder per Fingerabdruck gesperrt werden. Um das Mobiltelefon zum Zahlen zu nutzen, müssen Kunden sich in einem Kommunikationsnetz registrieren lassen. Die Bezahlfunktion beruht auf einem Übertragungsprotokoll. Hierbei wird in der Regel die so genannte NFC-Technologie (NFC = Near Field Communication) angewandt, die die Eigenschaften von RFID (RFID = Radio Frequency Identification) und kontaktlosen SmartCards kombiniert. Diese Funk-Erkennung ist eine Methode, um Daten auf einem Transponder berührungslos und ohne Sichtkontakt lesen und speichern zu können. Dieser Transponder kann an Objekten angebracht werden, welche dann anhand der darauf gespeicherten Daten automatisch und schnell identifiziert werden können.
D.h., die NFC-Technologie erlaubt den drahtlosen Austausch von Daten zwischen elektronischen Geräten im Nahbereich. Dabei erfolgt die Datenübertragung zwischen RFID-Chips und Lesegeräten. Die Informationen werden drahtlos über eine Entfernung von ca. 20 Zentimetern ausgetauscht. Die NFC-Einheit ist ein Chip, mit einer Antenne versehen, der es ermöglicht, beispielsweise die Verbindung zwischen einem Mobiltelefon und einem anderen Gerät herzustellen. Die NFC-Technologie besticht durch die Schnelligkeit und Einfachheit, mit der Geräte eine sichere, drahtlose Kommunikationsverbindung aufbauen können: Werden NFC-fähige Geräte nahe aneinander gehalten, registrieren sie sich sofort und stellen selbständig fest, wie sie Daten austauschen können.

Nachteilig für Informationsanbieter, insbesondere Anbieter von Suchergebnislisten, ist, dass diese keinen Nachweis erhalten, ob aufgrund einer von ihnen übermittelten Suchergebnisliste an ein mobiles elektronisches Endgerät in einem realen Geschäft bezahlt worden ist, D.h., nachteilig bei dem Bezahlen durch das mobile elektronische Endgeräte ist, dass wenn als Suchergebnis die Adresse eines realen Geschäftes erscheint, es keinen Nachweis dafür gibt, dass dieses Suchergebnis den Kunden tatsächlich veranlasst hat das reale Geschäft zu besuchen und dort einzukaufen. Der Betreiber einer Suchmaschine kann aufgrund des fehlenden Nachweises keine Kommission von dem Betreiber des realen Geschäfts erhalten. Das Businessmodell, auf das Google basiert, ist für Internetanwendungen begrenzt.

Aufgabe der vorliegenden Erfindung ist es, ein mobiles elektronisches Endgerät, ein Informationssystem und eine Verfahren zu schaffen, die eine Beziehung zwischen einer aufgrund einer über ein mobiles elektronisches Endgerät gestellten Suchanfrage übermittelten Suchergebnisliste und einem durch das mobile elektronische Endgerät ausgelösten Bezahlvorgang in einem realen Geschäft herstellen können. Ferner soll durch das Inbeziehungsetzen des auf das mobile elektronische Endgerät übermittelten Suchergebnisses und des Bezahlvorgangs ein Ranking der Suchergebnisse ermöglicht werden. Das mobile elektronische Endgerät, das Informationssystem und das Verfahren sollen ein Korrelieren von aufgrund einer Suchanfrage erzeugten Suchergebnissen mit einem Bezahlvorgang ermöglichen.

Die vorliegende Aufgabe wird erfindungsgemäß durch ein mobiles elektronisches Endgerät, insbesondere durch ein Mobiltelefon, gemäß Patentanspruch 1, durch ein Informationssystem gemäß Patentanspruch 5 sowie durch ein Verfahren gemäß Patentanspruch 12 gelöst. Weitere Ausgestaltungen der Erfindung ergeben sich aus den abhängigen Patentansprüchen. Merkmale und Details, die im Zusammenhang mit dem erfindungsgemäßen mobilen elektronischen Endgerät beschrieben sind, gelten dabei selbstverständlich, soweit anwendbar, auch im Zusammenhang mit dem erfindungsgemäßen Informationssystem sowie dem erfindungsgemäßen Verfahren und jeweils umgekehrt.

Ein mobiles elektronisches Endgerät, insbesondere ein Mobiltelefon, mit einer Schnittstelle zur Verbindung zu einer Rechnereinheit in einem Kommunikationsnetz, mit einer Eingabeeinrichtung zur Erzeugung einer Suchanfrage, die über die Schnittstelle an die Rechnereinheit übertragen wird oder übertragbar ist, mit einer Anzeigeeinrichtung zur Darstellung von von der Rechnereinheit erzeugten und übertragenen Suchergebnissen, mit einer auf dem Endgerät implementierten Bezahlfunktionalität, und mit einer Einrichtung zum Aufbau einer Verbindung zwischen dem mobilen elektronischen Endgerät und einem externen elektronischen Schreib/Lesegerät, bei dem das mobile elektronische Endgerät eine Komparatoreinrichtung aufweist, die auf das mobile elektronische Endgerät übertragene Suchergebnisse mit zumindest einer dem Schreib/Lesegerät zugeordneten Identifikationskennung vergleicht, stellt ein mobiles elektronisches Endgerät dar, welches ermöglicht ein Beziehung zwischen den auf das mobile elektronische Endgerät übertragenen Suchergebnissen und dem Bezahlvorgang, ausgelöst durch das mobile elektronische Endgerät, in einem realen Geschäft herzustellen.

Schreib/Lesegeräte, die für eine Bezahlvorgang ausgelegt sind, weisen jeweils eine Identifikationskennung auf, damit nachvollzogen werden kann wo und wann die Zahlung bzw. in welchen Höhe sie erfolgte. Ein mobiles elektronisches Endgerät im Lichte dieser Erfindung kann ein Smartphone, ein PDA (PDA = Persönlicher Digitaler Assistent), ein Notebook, ein Mobiltelefon darstellen oder ein ähnliches funkbasiertes mobiles Kleingerät sein, wobei insbesondere ein Mobiltelefon besonders geeignet ist.

Das mobile elektronische Endgerät weist eine Schnittstelle zur Verbindung zu einer Rechnereinheit in einem Kommunikationsnetz auf. Hierdurch können Daten zwischen dem mobilen elektronischen Endgerät und der Rechnereinheit ausgetauscht werden. Über die Rechnereinheit in dem Kommunikationsnetz kann ein Anbieter eines Suchdienstes/Informationsdienstes Suchanfrage bearbeiten.

Das mobile elektronische Endgerät weist eine Eingabeeinrichtung zur Erzeugung einer Suchanfrage auf, die über die Schnittstelle an die Rechnereinheit übertragen wird oder übertragbar ist. Die Eingabeeinrichtung kann als Tastatur, beispielsweise in Form von Tasten oder in Form eines Touchscreens, ausgebildet sein. Die Eingabeeinrichtung kann auch eine Spracherkennungsvorrichtung sein, die gesprochene Wörter in analoge bzw. digitale Sprachsignale umsetzt. Das mobile elektronische Endgerät weist in diesem Fall ein Mikrofon zur Aufnahme der gesprochenen Worte auf. Nach der Erzeugung der Suchanfrage wird diese über die Schnittstelle an die Rechnereinheit des Dienstanbieters übertragen. Die Rechnereinheit liefert dem mobilen elektronischen Endgerät Suchergebnisse, die aufgrund der gestellten Suchanfrage erzeugt werden. Wird als Suchanfrage die Frage gestellt "Suche ein Sushi-Restaurant in München", so erzeugt die Rechnereinheit ein Suchergebnisliste, in der Sushi-Restaurants in München angezeigt werden. Die Suchergebnisliste enthält Adressinformationen der Sushi-Restaurants in München. Insbesondere wird der Name, die Adresse und optional die Telefonnummer der jeweiligen Sushi-Restaurants angezeigt, so dass es für den Nutzer des mobilen elektronischen Endgerätes nachvollziehbar ist, wo die Sushi-Restaurants sind bzw. wie diese erreicht werden können.

Das mobile elektronische Endgerät weist zur Darstellung von von der Rechnereinheit erzeugten und übertragenen Suchergebnissen eine Anzeigeeinrichtung auf. Die Anzeigeeinrichtung ist insbesondere ein Display auf dem die Suchergebnisliste dargestellt werden kann. Die Anzeigeeinrichtung kann aber auch als Lautsprecher ausgebildet sein, so dass ein oder alle angezeigten Suchergebnisse der Suchergebnisliste über das mobile elektronische Endgerät angesagt werden können.

Das mobile elektronische Endgerät weist ferner eine Bezahlfunktionalität auf, die es ermöglicht mittels des mobilen elektronischen Endgerätes eine Bezahlung zu tätigen. Hierzu ist das mobile elektronische Endgerät mit einer Einrichtung zum Aufbau einer Verbindung zwischen dem mobilen elektronischen Endgerät und einem externen elektronischen Schreib/Lesegerät versehen. Die Bezahlfunktionalität erlaubt den drahtlosen Austausch von Daten zwischen dem mobilen elektronischen Endgerät und einem externen Schreib-/Lesegerät.

Vorteilhafterweise weist das mobile elektronische Endgerät eine Komparatoreinrichtung auf, die auf das mobile elektronische Endgerät übertragene Suchergebnisse mit zumindest einer dem Schreib/Lesegerät zugeordneten Identifikationskennung vergleicht. Wird mittels des mobilen elektronischen Endgerätes ein Bezahlvorgang getätigt, so findet ein Datenaustausch zwischen dem mobilen elektronischen Endgerät und dem Schreib/Lesegerät eines realen Geschäftes statt. Hierbei empfängt das mobile elektronische Endgerät eine dem Schreib/Lesegerät zugeordnete Identifikationskennung. In der Komparatoreinrichtung wird die Identifikationskennung des Schreib/Lesegerätes mit der Suchergebnisliste verglichen. Hierdurch kann festgestellt werden, ob eine Bezahlung in einem realen Geschäft, beispielsweise ein Geschäft des Einzelhandels, ein Restaurant, etc., aufgrund einer Suchanfrage und der durch die Suchanfrage übermittelten Suchergebnisliste erfolgte. Das Ergebnis des Vergleiches kann über die Schnittstelle zu der Rechnereinheit des Dienstanbieters übertragen werden. Dort kann das Ergebnis als Basis zur Erzeugung von Suchergebnislisten herangezogen werden.

Durch ein derartiges mobiles elektronisches Endgerät kann ein Informationsanbieter, insbesondere ein Anbieter von Suchergebnislisten, den Nachweis erhalten, ob aufgrund einer von ihnen übermittelten Suchergebnisliste an ein mobiles elektronisches Endgerät in einem realen Geschäft bezahlt worden ist, Der Informationsanbieter erhält den Nachweis, dass das von ihm an das mobile elektronische Endgerät übertragene Suchergebnis den Kunden tatsächlich veranlasst hat das reale Geschäft zu besuchen und dort einzukaufen. Der Betreiber einer Suchmaschine kann aufgrund dieses Nachweises eine Kommission von dem Betreiber des realen Geschäfts erhalten.

Vorteilhaft ist ferner ein mobiles elektronisches Endgerät, bei dem die Einrichtung zum Aufbau der Verbindung zwischen dem Endgerät und einem externen elektronischen Schreib/Lesegerät als Einrichtung zur Nahfeldkommunikation ausgebildet ist. Hierdurch kann auf einfache und schnelle Art und Weise eine Verbindung zwischen dem mobilen elektronischen Endgerät und dem externen elektronischen Schreib/Lesegerät geschaffen werden. Durch den Einsatz der Nahfeldkommunikation, der NFC-Technologie, kann schnell und einfach eine sichere, drahtlose Kommunikationsverbindung aufgebaut werden. So können sich die NFC-fähigen Geräte, d.h. das Endgerät und das Schreib/Lesegerät, wenn sie nahe aneinander gehalten werden, selbständig registrieren und dabei selbständig feststellen, wie sie Daten austauschen können.

Bevorzugt ist ein mobiles elektronisches Endgerät, bei dem die Bezahlfunktionalität auf einer Chipkarte, insbesondere auf einer SIM-Karte oder einer USIM-Karte, des Endgeräts implementiert ist. Über eine SIM-Karte (SIM = Subscriber Identity Module), die in das mobile elektronische Endgerät eingesetzt wird, ist es möglich sich in ein GSM-Kommunikationsnetz einzuwählen. Über eine USIM-Karte (USIM = Universal Subscriber Identity Module) ist es möglich sich in ein UMTS-Kommunikationsnetz einzuwählen. SIM-Karten und USIM-Karten weisen beispielsweise einen Chip mit elektronischen Kontakten auf. SIM-Karten und USIM-Karten weisen dabei Kontakte auf, die bisher nicht genutzt werden. Diese nicht genutzten Kontakte werden beispielsweise für die Bezahlfunktionalität bereitgestellt. Auf der Karte kann zusätzlich ein elektronischer Schlüssel vorgesehen sein, der eine eindeutige und sichere Buchung garantiert. Zum Bezahlen muss der Nutzer das mobile elektronische Endgerät an das entsprechende Schreib/Lesegerät eines realen Geschäftes halten. Die Abrechung kann beispielsweise derart erfolgen, dass die Chipkarte, insbesondere die SIM-Karte oder die USIM-Karte, als aufladbare Geldkarte fungiert. Ferner können die Beträge vom Anbieter des Kommunikationsnetzes, in dem das mobile elektronische Endgerät registriert ist, abgerechnet werden. So kann der Mobilfunkbetreiber die Beträge über die Telefonrechnung abbuchen.

Eine weitere vorteilhafte Ausgestaltung des mobilen elektronischen Endgerätes sieht vor, dass dieses eine Einrichtung zur Positionsbestimmung aufweist. Die Einrichtung zur Positionsbestimmung ermöglicht die genaue Ortsbestimmung des mobilen elektronischen Endgeräts. Vorteilhaft hierbei ist, dass mit der Suchanfrage die exakte Position des Absenders mit an die Rechnereinheit des Kommunikationsnetzes übertragen werden kann. So muss der Nutzer nicht zusätzlich zu seiner Suchanfrage seine Position mit angeben. Die Position des mobilen elektronischen Endgerätes kann automatisch bei Stellen oder Senden der Suchanfrage ermittelt und mit übertragen werden. Die Positionsdaten können von der Rechnereinheit übernommen werden, wodurch die Erzeugung der Suchergebnisse vereinfacht werden kann. Die Einrichtung zur Positionsbestimmung kann beispielsweise als GPS-System (GPS = Global Positioning System) ausgebildet sein. Dieses Satellitenortungssystem besteht aus mehreren Satelliten, die gleichmäßig um die Erde verteilt angeordnet sind. Jeder Punkt der Erde hat Kontakt zu zumindest drei Satelliten, so dass eine Positionsbestimmung auf wenige Meter genau möglich ist. GPS-Satelliten senden ein Signal aus, das die genaue Ortsbestimmung eines GPS-Empfängers ermöglicht. Die Empfänger, d.h. die mobilen elektronischen Endgeräte, können ihre Position ermitteln wenn sie feststehend sind, sich auf der Erdoberfläche, in der Erdatmosphäre oder in niederen Umlaufbahnen bewegen. Die Einrichtung zur Positionsbestimmung kann auch nach dem Europäischen Satellitennavigationssystem GALILEO funktionieren. Die für die Positionsbestimmung notwendigen Satelliten sind mit einer Atomuhr für extrem genaue Zeitmessungen ausgerüstet. Die Satelliten senden Signale aus, die verschlüsselte Informationen über den Sendezeitpunkt enthalten. Das Empfangsgerät in dem mobilen elektronischen Endgerät, beispielsweise ein Mobiltelefon, besitzt einen Speicher mit den genauen Koordinaten der jeweiligen Satellitenumlaufbahnen. Beim Empfang eines Signals kann somit der Satellit, von dem das Signal ausgestrahlt wurde, festgestellt sowie die Laufzeit des Signals und damit auch die Entfernung zum Sendesatelliten berechnet werden. Werden gleichzeitig Funksignale von mindestens drei Satelliten empfangen, so ist eine genaue Positionsbestimmung möglich.

Bevorzugt weist das mobile elektronische Endgerät zusätzlich eine Navigationseinrichtung aufweist. Die Navigationseinrichtung ermöglicht dem Nutzer des mobilen elektronischen Endgeräts das einfache Auffinden der Adressen die den Suchergebnissen in der Suchergebnisliste zugeordnet sind. Die Navigationseinrichtung kann dabei derart ausgebildet sein, dass dem Nutzer nach der Auswahl eines Suchergebnisses per Sprachführung der Weg von der aktuellen Position zu der Adresse des ausgewählten Suchergebnisses angesagt wird. Ferner kann die Navigationseinrichtung alternativ oder zusätzlich zur Sprachführung eine graphische Anzeige des Weges anbieten. Hierbei kann anhand von Pfeilen und/oder geographischen Karten, insbesondere Straßenkarten, die Richtung oder der zurückzulegende Weg dargestellt werden.

Die Aufgabe wird ferner durch ein Informationssystem zum Korrelieren von aufgrund einer Suchanfrage erzeugten Suchergebnissen mit einem Bezahlvorgang in einem Geschäft,
aufweisend zumindest ein mobiles elektronisches Endgerät, mit einer Schnittstelle zur Verbindung zu einer Rechnereinheit in einem Kommunikationsnetz, einer Eingabeeinrichtung zur Erzeugung einer Suchanfrage, die über die Schnittstelle an die Rechnereinheit übertragen wird oder übertragbar ist, einer Anzeigeeinrichtung zur Darstellung von von der Rechnereinheit erzeugten und übertragenen Suchergebnissen, einer auf dem Endgerät implementierten Bezahlfunktionalität, und mit einer Einrichtung zum Aufbau einer Verbindung zwischen dem Endgerät und einem externen elektronischen Schreib/Lesegerät,
aufweisend eine Rechnereinheit in dem Kommunikationsnetz mit einer Schnittstelle zur Verbindung zu wenigstens einem mobilen elektronischen Endgerät in dem Kommunikationsnetz, mit einer Speichereinrichtung mit Informationsdaten, mit einer Einrichtung zur Erzeugung von Suchergebnissen aufgrund der Suchanfrage eines mobilen elektronischen Endgeräts und zur Übertragung der Suchergebnisse an das mobile elektronische Endgerät,
aufweisend zumindest ein einem realen Geschäft zugeordnetes elektronisches Schreib/Lesegerät, mit einer Einrichtung zum Aufbau einer Verbindung zwischen dem zumindest einen elektronischen Schreib/Lesegerät und einem mobilen elektronischen Endgerät, und
aufweisend eine Komparatoreinrichtung, die in der Rechnereinheit erzeugte Suchergebnisse mit zumindest einer dem Schreib/Lesegerät zugeordneten Identifikationskennung vergleicht, gelöst.

Ein derartiges Informationssystem ermöglicht es, eine Beziehung zwischen einer Suchergebnisliste, die aufgrund einer von einem mobilen elektronischen Endgerät gestellten Suchanfrage erzeugt wird, und einem durch das mobile elektronische Endgerät ausgelösten Bezahlvorgang in einem realen Geschäft herstellen. Ferner kann durch ein derartiges Informationssystem ein Ranking der Suchergebnisse ermöglicht werden. Dies ermöglicht eine Auswertung des Vergleiches der Komparatoreinrichtung, die in der Rechnereinheit erzeugte Suchergebnisse mit Identifikationskennungen von Schreib/Lesegeräten vergleicht, nachdem ein Bezahlvorgang durch ein mobiles elektronisches Endgerät durchgeführt worden ist.

Durch ein derartiges Informationssystem kann ein Informationsanbieter, insbesondere ein Anbieter von Suchergebnislisten, den Nachweis erhalten, ob aufgrund einer von ihnen übermittelten Suchergebnisliste an ein mobiles elektronisches Endgerät in einem realen Geschäft bezahlt worden ist, Der Informationsanbieter erhält den Nachweis, dass das von ihm an das mobile elektronische Endgerät übertragene Suchergebnis den Kunden tatsächlich veranlasst hat das reale Geschäft zu besuchen und dort einzukaufen. Der Betreiber einer Suchmaschine kann aufgrund dieses Nachweises eine Kommission von dem Betreiber des realen Geschäfts erhalten.

Das Informationssystem weist zumindest ein mobiles elektronisches Endgerät, mit einer Schnittstelle zur Verbindung zu einer Rechnereinheit in einem Kommunikationsnetz, auf. Das mobile elektronische Endgerät weist insbesondere die Merkmale und Fähigkeiten, wie zuvor erwähnt, auf. Als mobiles elektronisches Endgerät kann ein Mobiltelefon, ein PDA, ein Smartphone, ein Notebook oder ein ähnliches kleines mobiles Kommunikationsgerät dienen. Über die Schnittstelle kann eine Datenverbindung zu der Rechnereinheit eines Informationsanbieters, insbesondere eines Suchdienstanbieters, hergestellt werden. Zur Erzeugung einer Suchanfrage weist das mobile elektronische Endgerät eine Eingabeeinrichtung auf. Die Eingabeeinrichtung kann als Spracherkennungsvorrichtung ausgebildet sein, die gesprochene Wörter in analoge bzw. digitale Sprachsignale umsetzt. Das mobile elektronische Endgerät weist hierfür ein Mikrofon zur Aufnahme der gesprochenen Worte auf. Die Eingabeeinrichtung kann ferner als Tastatur, beispielsweise in Form von Tasten oder in Form eines Touchscreens, ausgebildet sein. Die durch die Eingabeeinrichtung erzeugte Suchanfrage wird über die Schnittstelle an die Rechnereinheit des Dienstanbieters übertragen.

Das mobile elektronische Endgerät des Informationssystems weist ferner eine Anzeigeeinrichtung zur Darstellung von von der Rechnereinheit erzeugten und übertragenen Suchergebnissen auf. Die Anzeigeeinrichtung ist bevorzugt als Display ausgebildet. Die Suchergebnisse werden insbesondere in Form von Listen auf dem Display des mobilen elektronischen Endgerätes dargestellt, wobei den jeweiligen Suchergebnissen Adressinformationen beigefügt sind.

Des Weiteren weist das mobile elektronische Endgerät des Informationssystems eine implementierte Bezahlfunktionalität auf, die es ermöglicht mittels des mobilen elektronischen Endgerätes eine Bezahlung zu tätigen. Hierzu ist das mobile elektronische Endgerät mit einer Einrichtung zum Aufbau einer Verbindung zwischen dem mobilen elektronischen Endgerät und einem externen elektronischen Schreib/Lesegerät versehen. Die Bezahlfunktionalität erlaubt den drahtlosen Austausch von Daten zwischen dem mobilen elektronischen Endgerät und einem externen Schreib-/Lesegerät.

Das Informationssystem weist ferner eine Rechnereinheit eines Dienstanbieters in einem Kommunikationsnetz auf, wobei die Rechnereinheit eine Schnittstelle zur Verbindung zu wenigstens einem mobilen elektronischen Endgerät in dem Kommunikationsnetz aufweist. Die Schnittstelle der Rechnereinheit ermöglicht den Datenaustausch zwischen der Rechnereinheit und einem mobilen elektronischen Endgerät. Über die Schnittstelle kann die Rechnereinheit eine von einem mobilen elektronischen Endgerät ausgesandte Suchanfrage empfangen. Die Rechnereinheit weist ferner vorteilhafterweise eine Speichereinrichtung mit Informationsdaten auf. Die Informationsdaten können verschiedenartig bzw. vielfältig sein. Insbesondere können die Informationsdaten Adressinformationen von Orten, von realen Geschäften, wie Geschäften des Einzelhandels, von Gaststätten oder öffentlichen Einrichtungen sein. Des Weiteren weist die Rechnereinheit eine Einrichtung zur Erzeugung von Suchergebnissen aufgrund einer Suchanfrage eines mobilen elektronischen Endgeräts auf. Hierbei sucht die Einrichtung zur Erzeugung von Suchergebnissen aus den in der Speichereinrichtung gespeicherten Informationsdaten die zu der Suchanfrage passenden Informationsdaten heraus und listet diese in einer Suchergebnisliste auf. Bei der Erzeugung der Liste können bestimmte frei bestimmbare Parameter herangezogen werden, wie beispielsweise die Nähe der Adresse eines realen Geschäftes zu der aktuellen Position des mobilen elektronischen Endgerätes, von dem aus die Suchanfrage gestellt wurde. Die Datenbank der Speichereinrichtung kann durch Entfernen oder Hinzufügen von Informationsdaten dynamisch verändert werden. Die Einrichtung ist ferner zur Übertragung der Suchergebnisse an das mobile elektronische Endgerät ausgebildet. Hierbei werden die Suchergebnisse über die Schnittstelle der Rechnereinheit an das mobile elektronische Endgerät übertragen.

Das Informationssystem weist vorteilhafterweise zumindest ein einem Geschäft zugeordnetes elektronisches Schreib/Lesegerät sowie eine Einrichtung zum Aufbau einer Verbindung zwischen dem zumindest einen elektronischen Schreib/Lesegerät und einem mobilen elektronischen Endgerät auf. Hierdurch kann zum einen der Bezahlvorgang, der durch das mobile elektronische Endgerät ausgelöst wird, durchgeführt werden. Ferner können über diese Verbindung Identifikationskennungen des Schreib/Lesegerätes an das mobile elektronische Endgerät übertragen werden, wenn ein Bezahlvorgang erfolgreich durchgeführt worden ist.

Das Informationssystem weist ferner eine Komparatoreinrichtung auf, die in der Rechnereinheit erzeugte Suchergebnisse mit zumindest einer dem Schreib/Lesegerät zugeordneten Identifikationskennung vergleicht. Hierdurch kann festgestellt werden, ob eine Bezahlung in einem realen Geschäft aufgrund eines Suchergebnisses, das aufgrund einer Suchanfrage des mobilen elektronischen Endgerätes erzeugt wurde, erfolgte. Durch ein derartiges Informationssystem kann eine Korrelation von aufgrund einer Suchanfrage erzeugten Suchergebnissen mit einem Bezahlvorgang in einem Geschäft hergestellt werden. D.h., der Betreiber des Kommunikationsnetzes, der Suchergebnisse aufgrund einer Suchanfrage bereitstellt, kann aufgrund der Informationen, die die Komparatoreinrichtung liefert, Rückschlüsse ziehen. So kann er die Suchergebnisliste entsprechend der Häufigkeit des Bezahlens in einem Geschäft verändern. D.h., die Positionen der Suchergebnisse in der Suchergebnisliste, das so genannte Ranking, kann in Abhängigkeit eines Bezahlvorgangs in einem Geschäft, das der Nutzer des mobilen elektronischen Endgeräts über die Suchanfrage bzw. die Suchergebnisliste ausgesucht hat, erfolgen.

Durch ein derartiges Informationssystem kann ein Nachweis generiert werden, das ein Suchergebnis einer Suchmaschine eines Suchdienstanbieters zu einem Einkauf in der Suchergebnisliste aufgeführten Geschäften geführt hat.

In einer vorteilhaften Ausführungsform des Informationssystems ist die Komparatoreinrichtung in einem mobilen elektronischen Endgerät angeordnet. Die Komparatoreinrichtung vergleicht direkt in dem Endgerät die auf das mobile elektronische Endgerät übertragenen Suchergebnisse mit zumindest einer dem Schreib/Lesegerät zugeordneten ldentifikationskennung. Hierdurch kann festgestellt werden, ob eine Bezahlung in einem realen Geschäft aufgrund einer Suchanfrage und der durch die Suchanfrage übermittelten Suchergebnisliste erfolgte. Das Ergebnis des Vergleiches wird über die Schnittstelle des mobilen elektronischen Endgerätes zu der Rechnereinheit des Dienstanbieters übertragen. Dort kann das Ergebnis als Basis zur Erzeugung von Suchergebnislisten herangezogen werden. Ferner kann das Ergebnis als Basis zur Abrechnung für die Bereitstellung eines Suchergebnisses in der Suchergebnisliste dienen.

In einer alternativen Ausführungsform des Informationssystems, ist die Komparatoreinrichtung in der Rechnereinheit des Kommunikationsnetzes angeordnet. Die dem Schreib/Lesegerät zugeordnete ldentifikationskennung wird nach Durchführung des Bezahlvorgangs in einem Geschäft an die Rechnereinheit des Kommunikationsnetzes übertragen. In der Komparatoreinrichtung findet dann der Vergleich zwischen der Identifikationskennung des Schreib/Lesegerätes, die von einem mobilen elektronischen Endgerät übertragen worden ist, und der Suchergebnisliste, die zuvor dem mobilen elektronischen Endgerät von der Rechnereinheit aufgrund der Suchanfrage des mobilen elektronischen Endgerätes zugesandt worden ist, statt.

In einer weiteren bevorzugten Ausführungsform des Informationssystems, weist das zumindest eine mobile elektronische Endgerät und/oder die Rechnereinheit eine Einrichtung zur Positionsbestimmung des zumindest einen mobilen elektronischen Endgeräts auf. Hierdurch kann in dem mobilen elektronischen Endgerät und/oder in der Rechnereinheit die Position des mobilen elektronischen Endgerätes festgestellt werden. Bevorzugt ist die Einrichtung zur Positionsbestimmung aber in dem mobilen elektronischen Endgerät vorgesehen. So kann mit der Suchanfrage die aktuelle Position des mobilen elektronischen Endgeräts an die Rechnereinheit übertragen werden, so dass das Erzeugen der Suchergebnisliste in Abhängigkeit der Position des mobilen elektronischen Endgeräts erstellt werden kann. Vorteilhaft hierbei ist, dass der Nutzer des mobilen elektronischen Endgerätes nicht zusätzlich zu seiner Suchanfrage seine Position mit angeben muss. Die Position des mobilen elektronischen Endgerätes kann automatisch bei Stellen oder Senden der Suchanfrage ermittelt werden.

Ein Informationssystem, bei dem die Einrichtung zum Aufbau der Verbindung zwischen dem zumindest einen mobilen elektronischen Endgerät und einem elektronischen Schreib/Lesegerät als Einrichtung zur Nahfeldkommunikation ausgebildet ist, ist besonders einfach und schnell zur Durchführung eines Bezahlvorganges und zur Übermittlung der Identifikationskennung eines Schreib/Lesegerätes einsetzbar. Das mobilen elektronischen Endgerät wird in unmittelbarer Nähe an dem Schreib/ Lesegerät vorbeigeführt, so dass ein Verbindungsaufbau stattfinden kann.

Die Bezahlfunktionalität ist in dem mobilen elektronischen Endgerät des Informationssystems implementiert. Bevorzugt ist ein Informationssystem, bei dem die Bezahlfunktionalität auf einer Chipkarte, insbesondere auf einer SIM-Karte oder auf einer USIM-Karte, des zumindest einen mobilen elektronischen Endgeräts implementiert ist. SIM-Karten und USIM-Karten weisen einen Chip mit elektronischen Kontakten auf. Diese Karten weisen Kontakte auf, die bisher nicht genutzt werden. Diese nicht benutzten Kontakte können für die Bezahlfunktionalität bereitgestellt werden. Zusätzlich kann auf der Karte ein elektronischer Schlüssel vorgesehen sein, der eine eindeutige und sichere Buchung garantiert. Zum Bezahlen muss der Nutzer das mobile elektronische Endgerät an das entsprechende Schreib/Lesegerät eines realen Geschäftes halten. Die Abrechung kann beispielsweise derart erfolgen, dass die Chipkarte, insbesondere die SIM-Karte oder die USIM-Karte, als aufladbare Geldkarte oder als Kreditkarte fungiert. Ferner können die Beträge vom Anbieter des Kommunikationsnetzes, in dem das mobile elektronische Endgerät registriert ist, abgerechnet werden. So kann der Mobilfunkbetreiber die Beträge über die Mobiltelefonrechnung abbuchen.

Von Vorteil ist ferner ein Informationssystem, bei dem das zumindest eine mobile elektronische Endgerät eine Navigationseinrichtung aufweist. Hierdurch kann dem Nutzer des mobilen elektronischen Endgerätes eine Zielführung zu der Adresse des von ihm ausgewählten Suchergebnisses aus der Suchergebnisliste bereitgestellt werden. Die Navigationseinrichtung kann dabei derart ausgebildet sein, dass dem Nutzer nach der Auswahl eines Suchergebnisses per Sprachführung der Weg von der aktuellen Position zu der Adresse des Suchergebnisses angesagt wird. Ferner kann die Navigationseinrichtung alternativ oder zusätzlich zur Sprachführung eine graphische Anzeige des Weges anbieten. Hierbei kann anhand von Pfeilen und/oder geographischen Karten, insbesondere Straßenkarten, die Richtung oder der zurückzulegende Weg dargestellt werden.

Ein Informationssystem, bei dem die Rechnereinheit ein Datenarchiv aufweist, in dem Übereinstimmungen von Identifikationskennungen von Schreib/Lesegeräten wenigstens eines Geschäfts mit auf das Endgerät übertragenen Suchergebnissen gespeichert sind, ermöglicht eine sehr einfache und schnelle statistische Auswertung der Übereinstimmungen. D.h., der Anbieter des Suchdienstes kann über das Datenarchiv der Rechnereinheit Listen erzeugen, die ihm anzeigen, wie häufig in einem realen Geschäft ein Bezahlvorgang durchgeführt worden ist, wobei der Bezahlvorgang bzw. das Aufsuchen des Geschäftes in Relation zu dem von der Rechnereinheit an das mobile elektronische Endgerät übermittelten Suchergebnis steht. Der Anbieter des Suchdienstes erhält so den Nachweis, wie häufig ein Suchergebnis zu einem Einkauf in einem Geschäft geführt hat. Aufgrund der einfach zu erzeugenden Statistiken kann er die Erzeugung der Suchergebnislisten bzw. das Ranking der einzelnen Suchergebnisse beeinflussen. Ferner können aufgrund des Datenarchivs Listen erzeugt werden, die zur Abrechnung der Bereiststellungskosten für das Aufführen der Namen und der Adressen der jeweiligen realen Geschäfte in den Suchergebnislisten dienen. Wenn der Inhaber eines realen Geschäftes sieht, dass sein Geschäft aufgrund des Suchergebnisses einer Suchanfrage eines Suchdienstes aufgesucht worden ist und ferner eine Ware gekauft worden ist, so kann er leicht den Mehrwert des Suchdienstes erkennen, was ihm ein gewisses Entgelt wert ist.

Vorteilhaft es ferner ein Informationssystem, bei dem die Einrichtung zum Erzeugen von Suchergebnissen Mittel zur dynamischen Positionierung von Suchergebnissen in einer Suchergebnisdatei aufweist. Hierdurch kann eine Suchergebnisliste aufgrund zuvor ermittelter Bezahlvorgänge, die aufgrund des in Anspruch genommenen Suchdienstes erfolgen, variabel verändert werden. Führt eine Suchanfrage und die danach übermittelte Suchergebnisliste zu einem Einkauf in einem Geschäft, so stellt dies einen Mehrwert für das Geschäft dar. Damit der Name und die Adresse des Geschäfts möglichst hoch in der Suchergebnisliste gerankt sind, wird der Eigentümer des realen Geschäftes einen höheren Beitrag für die Bereitstellung zahlen, als wenn über den Suchdienst kein Kunde in sein Geschäft kommt. Den Nachweis, dass ein Kunde tatsächlich aufgrund einer Suchergebnisliste in das Geschäft gekommen ist, kann der Betreiber des Suchdienstes mittels des erfindungsgemäßen Informationsdienstes leicht erbringen.

Die Aufgabe wird ferner durch ein Verfahren zum Korrelieren von aufgrund einer Suchanfrage erzeugten Suchergebnissen mit einem Bezahlvorgang in einem Geschäft gelöst. Das Verfahren ist gekennzeichnet dadurch,
dass eine Suchanfrage in einer Eingabeeinrichtung zumindest eines mobilen elektronischen Endgerätes erzeugt und zu einer einem Kommunikationsnetz zugeordneten Rechnereinheit eines Dienstanbieters übertragen wird,
dass in der Rechnereinheit die Suchanfrage mit Informationsdaten, die auf einer Speichereinrichtung der Rechnereinheit gespeichert sind, verglichen wird und dass bei Übereinstimmung der Suchanfrage mit gespeicherten Informationsdaten Suchergebnisse erzeugt werden,
dass die erzeugten Suchergebnisse von der Rechnereinheit an das zumindest eine mobile elektronische Endgerät übertragen und auf einer Anzeigeeinrichtung des Endgerätes dargestellt werden,
dass in einer Komparatoreinrichtung die auf das Endgerät übertragenen Suchergebnisse mit einer einem externen elektronischen Schreib/Lesegerät eines Geschäfts zugeordneten Identifikationskennung verglichen werden, wenn über eine auf dem Endgerät implementierte Bezahlfunktionalität eine Verbindung mit dem externen elektronischen Schreib/Lesegerät des Geschäfts zum Bezahlen einer Rechnung aufgebaut worden ist,
und dass bei einer Übereinstimmung der Identifikationskennung eines Schreib/Lesegerätes des Geschäfts mit den auf das Endgerät übertragenen Suchergebnissen das Ergebnis in einem Datenarchiv der Rechnereinheit gespeichert wird.

Hierdurch wird ein Verfahren geschaffen, das eine Beziehung zwischen einer aufgrund einer über ein mobiles elektronisches Endgerät gestellten Suchanfrage übermittelten Suchergebnisliste und einem durch das mobile elektronische Endgerät ausgelösten Bezahlvorgang in einem realen Geschäft herstellt. Durch das Inbeziehungsetzen des auf das mobile elektronische Endgerät übermittelten Suchergebnisses und des Bezahlvorgangs kann ein Ranking der Suchergebnisse ermöglicht werden.

Durch ein derartiges Verfahren kann ein Informationsanbieter, insbesondere ein Anbieter von Suchergebnislisten, den Nachweis erhalten, ob aufgrund einer von ihnen übermittelten Suchergebnisliste an ein mobiles elektronisches Endgerät in einem realen Geschäft bezahlt worden ist, Der Informationsanbieter erhält durch ein derartiges Verfahren den Nachweis, dass das von ihm an das mobile elektronische Endgerät übertragene Suchergebnis den Kunden tatsächlich veranlasst hat das reale Geschäft zu besuchen und dort einzukaufen. Der Betreiber einer Suchmaschine kann aufgrund dieses Nachweises eine Kommission von dem Betreiber des realen Geschäfts verlangen.

Bevorzugt ist ein Verfahren, bei dem der Vergleich der Identifikationskennung des Schreib/Lesegerätes des Geschäfts mit den auf das Endgerät übertragenen Suchergebnissen in einer Komparatoreinrichtung des zumindest einen Endgerätes durchgeführt wird, und dass bei einer Übereinstimmung der Identifikationskennung des Schreib/Lesegerätes mit den auf das Endgerät übertragenen Suchergebnissen das Ergebnis an die Rechnereinheit des Dienstanbieters übertragen wird. Durch den sofortigen Vergleich werden der Rechnereinheit nur Übereinstimmungen übermittelt. Dies spart Rechenaufwand und Zeit in der Rechnereinheit, da dort kein Vergleich mehr durchgeführt werden muss. In der Rechnereinheit können die übertragen übereinstimmenden Informationen sofort weiterverarbeitet werden.

Alternativ zu dem zuvor genannten Verfahrensschritt kann das Verfahren derart ablaufen, dass während eines Bezahlvorgangs die Identifikationskennung des Schreib/Lesegerätes über eine Schnittstelle des Schreib/Lesegerätes oder über das Endgerät an die Rechnereinheit übertragen wird und dass der Vergleich der Identifikationskennung des Schreib/Lesegerätes mit den auf das Endgerät übertragenen Suchergebnissen in einer Komparatoreinrichtung der Rechnereinheit durchgeführt wird. Hier wird der Vergleich nicht direkt in dem mobilen elektronischen Endgerät durchgeführt, sondern erst in der Komparatoreinrichtung der Rechnereinheit. Vorteilhaft ist hierbei, dass nach einem Bezahlvorgang die Identifikationskennung entweder von dem mobilen elektronischen Endgerät oder von dem Schreib/Lesegerät des realen Geschäftes an die Rechnereinheit übertragen werden kann. Ein weiterer Vorteil bei diesem Verfahrensschritt ist, dass die mobilen elektronischen Endgeräte nicht mit einer Komparatoreinrichtung ausgestattet werden müssen. Ein mobiles elektronisches Endgerät mit einer integrierten Komparatoreinrichtung ist teurer, als ein mobiles elektronisches Endgerät ohne Komparatoreinrichtung. So müsste nur der Suchdienstanbieter einmalig eine Komparatoreinrichtung in der Rechnereinheit integrieren.

Ein Verfahrenschritt, bei dem bei Übertragung der Suchanfrage in der Rechnereinheit die Position des mobilen elektronischen Endgeräts automatisch ermittelt wird, bei dem in der Rechnereinheit die Suchanfrage mit Informationsdaten verglichen wird, wobei die Informationsdaten mit Positionsdaten verknüpft sind, und bei dem bei Übereinstimmung der Suchanfrage mit gespeicherten Informationsdaten positionsbezogene Suchergebnisse erzeugt werden, ermöglicht eine einfache und schnelle Erzeugung einer Suchergebnisliste. Die Bestimmung der Position des Endgeräts in der Rechnereinheit hat den Vorteil, dass mit der Suchanfrage keine Positionsdaten des Endgerätes durch den Nutzer angegeben werden müssen. Das Endgerät benötigt auch keine Einrichtung zur Positionsbestimmung. Hierdurch können die mobilen elektronischen Endgeräte günstiger hergestellt werden. Insbesondere, wenn der Anbieter des Suchdienstes auch der Anbieter des Kommunikationsnetzes ist, kann er einfach die Position des mobilen elektronischen Endgerätes ermitteln, wenn eine Suchanfrage von dem mobilen elektronischen Endgerät an die Rechnereinheit übertragen wird.

Alternativ hierzu ist ein Verfahrenschritt denkbar, bei dem beim Erzeugen der Suchanfrage im mobilen elektronischen Endgerät die Position des mobilen elektronischen Endgeräts automatisch ermittelt wird, bei dem bei Übertragung der Suchanfrage auch die Position des mobilen elektronischen Endgeräts an die Rechnereinheit übertragen wird, bei dem in der Rechnereinheit die Suchanfrage mit Informationsdaten verglichen wird, wobei die Informationsdaten mit Positionsdaten verknüpft sind, und bei dem bei Übereinstimmung der Suchanfrage mit gespeicherten Informationsdaten positionsbezogene Suchergebnisse erzeugt werden. Durch einen derartigen Verfahrensschritt wird die Rechnereinheit entlastet, da die Position des mobilen elektronischen Endgeräts bereits im mobilen elektronischen Endgerät selber bestimmt wird. Die Rechnereinheit kann nach Eintreffen der Suchanfrage direkt mit dem Vergleich der Suchanfrage und der Positionsdaten des mobilen elektronischen Endgeräts mit Informationsdaten, die in der Speichereinrichtung der Rechnereinheit abgelegt sind, beginnen. Bei der Erzeugung der Suchergebnisse wird die Position des mobilen elektronischen Endgerätes berücksichtigt, so dass beispielsweise aufgrund einer Suchanfrage nach einem Sushi-Restaurant, die von einem mobilen elektronischen Endgerät gestellt wurde, dessen aktuelle Position in München ist, keine Sushi-Restaurants außerhalb von München in die Suchergebnisliste aufgenommen werden.

Bevorzugt ist des Weiteren ein erfindungsgemäßes Verfahren, bei dem die Verbindung zwischen dem zumindest einen mobilen elektronischen Endgerät und dem externen elektronischen Schreib/Lesegerät mittels einer Nahfeldkommunikation erfolgt. Hierdurch kann auf einfache und schnelle Art und Weise eine Verbindung zwischen dem mobilen elektronischen Endgerät und dem externen elektronischen Schreib/Lesegerät geschaffen werden. Durch den Einsatz der Nahfeldkommunikation, der so genannten NFC-Technologie, kann schnell und einfach eine sichere, drahtlose Kommunikationsverbindung aufgebaut werden. So können sich das mobile elektronische Endgerät und das elektronische Schreib/Lesegerät, wenn sie nahe aneinander gehalten werden, selbständig registrieren und dabei selbständig feststellen, wie sie Daten austauschen können.

Bevorzugt ist ferner ein erfindungsgemäßes Verfahren, bei dem die Darstellung der übertragenen Suchergebnisse im mobilen elektronischen Endgerät mittels einer Navigationseinrichtung erfolgt. Dies ermöglicht das einfache Auffinden des Ziels, das der Nutzer des Endgeräts sich aufgrund der Suchergebnisliste ausgesucht hat.

Ein anderer vorteilhafter Verfahrensschritt sieht vor, dass Übereinstimmungen von Identifikationskennungen von Schreib/Lesegeräten wenigstens eines realen Geschäfts mit auf das mobile elektronische Endgerät übertragenen Suchergebnissen in einem Datenarchiv der Rechnereinheit gespeichert werden. Hierdurch wird eine sehr einfache und schnelle statistische Auswertung der Übereinstimmungen ermöglicht. D.h., der Anbieter des Suchdienstes kann über das Datenarchiv der Rechnereinheit Listen erzeugen, die ihm anzeigen, wie häufig in einem realen Geschäft ein Bezahlvorgang durchgeführt worden ist, wobei der Bezahlvorgang bzw. das Aufsuchen des Geschäftes in Relation zu dem von der Rechnereinheit an das mobile elektronische Endgerät übermittelten Suchergebnis steht. Der Anbieter des Suchdienstes erhält so den Nachweis, wie häufig ein Suchergebnis zu einem Einkauf in einem realen Geschäft geführt hat. Aufgrund der einfach zu erzeugenden Statistiken kann er die Erzeugung der Suchergebnislisten bzw. das Ranking der einzelnen Suchergebnisse beeinflussen. Ferner können aufgrund des Datenarchivs Listen erzeugt werden, die zur Abrechnung der Bereiststellungskosten für das Aufführen der Namen und der Adressen der jeweiligen realen Geschäfte in den Suchergebnislisten dienen. Wenn der Inhaber eines realen Geschäftes sieht, dass sein Geschäft aufgrund des Suchergebnisses einer Suchanfrage eines Suchdienstes aufgesucht worden ist und ferner eine Ware gekauft worden ist, so kann er leicht den Mehrwert des Suchdienstes erkennen, was ihm ein gewisses Entgelt des Suchdienstes wert sein sollte.

Ein Verfahren, bei dem die erzeugten Suchergebnisse in einer Suchergebnisdatei dynamisch positioniert werden, hat den Vorteil, dass Änderungen im Kaufverhalten des Kunden des Suchdienstes bei der Erzeugung der Suchergebnisliste leicht berücksichtigt werden können. Führt eine Suchanfrage und die danach übermittelte Suchergebnisliste zu einem Einkauf in einem realen Geschäft, so stellt dies einen Mehrwert für das Geschäft dar. Damit der Name und die Adresse des Geschäfts möglichst hoch in der Suchergebnisliste gerankt sind, wird der Eigentümer des Geschäftes einen höheren Beitrag für die Bereitstellung zahlen, als wenn über den Suchdienst kein Kunde in sein Geschäft kommt. Den Nachweis, dass ein Kunde tatsächlich aufgrund einer Suchergebnisliste in das Geschäft gekommen ist, kann der Betreiber des Suchdienstes mittels des erfindungsgemäßen Informationssystems bzw. des zuvor beschriebenen Verfahrens leicht erbringen.

Durch das erfindungsgemäße mobile elektronische Endgerät, durch das erfindungsgemäße Informationssystem sowie durch das erfindungsgemäße Verfahren kann eine Gesamtlösung geschaffen werden, die das "Suchen" und "Finden" von realen Geschäften und das "Einkaufen" bzw. das "Bezahlen" in der funkbasierten, physikalischen Welt ermöglicht. Es wird die Erschließung vollkommen neuer Umsatzpotentiale aus der Vermarktung von Suchfunktion ermöglicht.

Über das erfindungsgemäße mobile elektronische Endgerät, durch das erfindungsgemäße Informationssystem sowie durch das erfindungsgemäße Verfahren kann auch die Höhe eines Einkaufs festgestellt werden und mit den Suchergebnissen der Suchmaschine des Suchdienstanbieters verknüpft werden. Damit entsteht eine Information über den Wert des Suchergebnisses im Sinne von Umsatz in einem realen Geschäft.

Durch den Start eines Navigationsservices nach der Auswahl eines Suchergebnisses aus der Suchergebnisliste, kann dem Kunden direkt der Weg in das ausgewählte Geschäft angezeigt werden. Dies erhöht die Quote der erfolgreich vermittelten Einkäufe der Suchmaschine des Dienstanbieters und erhöht die Kundenakzeptanz des Suchdienstes.
Die Treffer in der Suchmaschine werden optional nach dem Standort des Benutzers, d.h. des Endgerätes, geranked. Die sehr nahen realen Geschäfte finden sich oben auf der Liste der Treffer wieder.

Ein Kunde des Suchdienstanbieters ruft die Suchfunktion im Mobiltelefon auf und gibt "Sushi" ein. Weiterhin aktiviert er die Option "im Umkreis suchen". Über das Mobilfunknetz wird die Suchanfrage an die Rechnereinheit des Suchdienstanbieters übermittelt. Der Ort des Mobiltelefons wird mit Hilfe der LBS-Technologie (LBS = location based service) festgestellt. Die Einrichtung zur Erzeugung eines Suchergebisses, d.h. die Suchmaschine, liefert eine Liste von Adressen von Sushi-Shops in der Umgebung des Mobiltelefons und zeigt diese Liste auf dem Display des Mobiltelefons an. Die Rechnereinheit des Dienstanbieters speichert beispielsweise folgende Daten: Die Mobiltelefonkennung (z.B. MSISDN), den Standort des Mobiltelefons, das aktuelle Datum und die aktuelle Uhrzeit, die Liste der gelieferten Adressen, d.h. die Suchergebnisliste.
Neben der Liste der gelieferten Adressen kann gespeichert werden, dass eine Navigationsunterstützung stattgefunden hat.
Der Nutzer des Mobiltelefons wählt beispielsweise einen Eintrag aus der Liste der gelieferten Adressen aus und bittet um Navigationsunterstützung.

Das Navigationssystem erstellt eine Lageplan, auf dem der aktuelle Standort des Mobiltelefons und die Zieladresse des ausgewählten realen Geschäftes eingezeichnet sind. Weiterhin kann optional die Wegstrecke ermittelt und angezeigt werden. So erhält der Nutzer des Mobiltelefons beispielsweise die Information: "nehme U-Bahn U3 bis Marienplatz; von dort 100m in die Theatinerstr. bis Sushi-Shop "Happy-Sushi"".
Der Nutzer des Mobiltelefons kauft in dem Sushi-Shop ein und bezahlt mit der Bezahlfunktionalität des Mobiltelefons (z.B. Geldkarte, Kreditkarte, Mobile Payment usw.). Je nach Ausgestaltung des Dienstes erhält der Nutzer des Mobiltelefons bzw. des Suchdienstes einen Bonus, wenn er mit dem Mobiltelefon bezahlt (z.B. in der Aufbauphase des Suchdienstes als Promotion). Die Bezahldaten werden an die Rechnereinheit des Suchdienstanbieters übermittelt. Die Bezahldaten sind insbesondere die Mobiltelefon-Kennung, die Kennung des realen Geschäftes, das aktuelle Datum und die aktuelle Uhrzeit sowie der Umsatz.

Die Suchergebnislisten und die Bezahldaten werden abgeglichen. Wird eine Übereinstimmung, ein "Match", erkannt, d.h. passen die Bezahldaten zu einer vorherigen Suchanfrage bzw. zu der Suchergebnisliste, so werden diese Daten, die Übereinstimmungen, in ein Datenarchiv übermittelt. Diese Daten dienen der Abrechnung gegenüber den realen Geschäften (bei Kommissionsmodellen) oder gehen in Statistiken ein, welche die Grundlage für die Berechnung von Preisen für die Vermarktung von Positionen in der Suchergebnisliste der Suchmaschine dienen.

## Patentansprüche

1. Mobiles elektronisches Endgerät, insbesondere Mobiltelefon, mit einer Schnittstelle zur Verbindung zu einer Rechnereinheit in einem Kommunikationsnetz, einer Eingabeeinrichtung zur Erzeugung einer Suchanfrage, die über die Schnittstelle an die Rechnereinheit übertragen wird oder übertragbar ist, einer Anzeigeeinrichtung zur Darstellung von von der Rechnereinheit erzeugten und übertragenen Suchergebnissen, einer auf dem Endgerät implementierten Bezahlfunktionalität, und mit einer Einrichtung zum Aufbau einer Verbindung zwischen dem Endgerät und einem externen elektronischen Schreib/Lesegerät, **dadurch gekennzeichnet, dass** das Endgerät eine Komparatoreinrichtung aufweist, die auf das Endgerät übertragene Suchergebnisse mit zumindest einer dem Schreib/Lesegerät zugeordneten Identifikationskennung vergleicht.

2. Mobiles elektronisches Endgerät nach Anspruch 1, **dadurch gekennzeichnet, dass** die Einrichtung zum Aufbau der Verbindung zwischen dem Endgerät und einem externen elektronischen Schreib/Lesegerät als Einrichtung zur Nahfeldkommunikation ausgebildet ist.

3. Mobiles elektronisches Endgerät nach Anspruch 1 oder 2, **dadurch gekennzeichnet, dass** die Bezahlfunktionalität auf einer Chipkarte, insbesondere auf einer SIM-Karte oder einer USIM-Karte, des Endgeräts implementiert ist.

4. Mobiles elektronisches Endgerät nach einen der Ansprüche 1 bis 3, **dadurch gekennzeichnet, dass** dieses eine Einrichtung zur Positionsbestimmung und/oder dass dieses eine Navigationseinrichtung aufweist.

5. Informationssystem zum Korrelieren von aufgrund einer Suchanfrage erzeugten Suchergebnissen mit einem Bezahlvorgang in einem Geschäft, aufweisend zumindest ein mobiles elektronisches Endgerät, mit einer Schnittstelle zur Verbindung zu einer Rechnereinheit in einem Kommunikationsnetz, einer Eingabeeinrichtung zur Erzeugung einer Suchanfrage, die über die Schnittstelle an die Rechnereinheit übertragen wird oder übertragbar ist, einer Anzeigeeinrichtung zur Darstellung von von der Rechnereinheit erzeugten und übertragenen Suchergebnissen, einer auf dem Endgerät implementierten Bezahlfunktionalität, und mit einer Einrichtung zum Aufbau einer Verbindung zwischen dem Endgerät und einem externen elektronischen Schreib/Lesegerät,
aufweisend eine Rechnereinheit im Kommunikationsnetz mit einer Schnittstelle zur Verbindung zu wenigstens einem mobilen elektronischen Endgerät in dem Kommunikationsnetz, mit einer Speichereinrichtung mit Informationsdaten, mit einer Einrichtung zur Erzeugung von Suchergebnissen aufgrund der Suchanfrage eines mobilen elektronischen Endgeräts und zur Übertragung der Suchergebnisse an das mobile elektronische Endgerät, aufweisend zumindest ein einem Geschäft zugeordnetes elektronisches Schreib/Lesegerät, mit einer Einrichtung zum Aufbau einer Verbindung zwischen dem zumindest einen elektronischen Schreib/Lesegerät und einem mobilen elektronischen Endgerät,
aufweisend eine Komparatoreinrichtung, die in der Rechnereinheit erzeugte Suchergebnisse mit zumindest einer dem Schreib/Lesegerät zugeordneten Identifikationskennung vergleicht.

6. Informationssystem nach Anspruch 5, **dadurch gekennzeichnet, dass** die Komparatoreinrichtung im einem mobilen elektronischen Endgerät oder dass die Komparatoreinrichtung in der Rechnereinheit des Kommunikationsnetzes angeordnet ist.

7. Informationssystem nach einen der Ansprüche 5 oder 6, **dadurch gekennzeichnet, dass** das zumindest eine mobile elektronische Endgerät und/oder die Rechnereinheit eine Einrichtung zur Positionsbestimmung des zumindest einen mobilen elektronischen Endgeräts aufweist.

8. Informationssystem nach einen der Ansprüche 5 bis 7, **dadurch gekennzeichnet, dass** die Einrichtung zum Aufbau der Verbindung zwischen dem zumindest einen mobilen elektronischen Endgerät und einem elektronischen Schreib/Lesegerät als Einrichtung zur Nahfeldkommunikation ausgebildet ist.

9. Informationssystem nach einen der Ansprüche 5 bis 8, **dadurch gekennzeichnet, dass** die Bezahlfunktionalität auf einer Chipkarte, insbesondere auf einer SIM-Karte oder auf einer USIM-Karte, des zumindest einen mobilen elektronischen Endgeräts implementiert ist.

10. Informationssystem nach einem der Ansprüche 5 bis 9, **dadurch gekennzeichnet, dass** die Rechnereinheit ein Datenarchiv aufweist, in dem Übereinstimmungen von Identifikationskennungen von Schreib/Lesegeräten wenigstens eines Geschäfts mit auf das Endgerät übertragenen Suchergebnissen gespeichert sind.

11. Informationssystem nach einem der Ansprüche 5 bis 10, **dadurch gekennzeichnet, dass** die Einrichtung zum Erzeugen von Suchergebnissen Mittel zur dynamischen Positionierung von Suchergebnissen in einer Suchergebnisdatei aufweist.

12. Verfahren zum Korrelieren von aufgrund einer Suchanfrage erzeugten Suchergebnissen mit einem Bezahlvorgang in einem Geschäft, **dadurch**
**gekennzeichnet,**
**dass** eine Suchanfrage in einer Eingabeeinrichtung zumindest eines mobilen elektronischen Endgerätes erzeugt und zu einer einem Kommunikationsnetz zugeordneten Rechnereinheit übertragen wird;
**dass** in der Rechnereinheit die Suchanfrage mit Informationsdaten, die auf einer Speichereinrichtung der Rechnereinheit gespeichert sind, verglichen wird und dass bei Übereinstimmung der Suchanfrage mit gespeicherten Informationsdaten Suchergebnisse erzeugt werden;
**dass** die erzeugten Suchergebnisse von der Rechnereinheit an das zumindest eine mobile elektronische Endgerät übertragen und auf einer Anzeigeeinrichtung des Endgerätes dargestellt werden;
**dass** in einer Komparatoreinrichtung die auf das Endgerät übertragenen Suchergebnisse mit einer einem externen elektronischen Schreib/Lesegerät eines Geschäfts zugeordneten Identifikationskennung verglichen werden, wenn über eine auf dem Endgerät implementierte Bezahlfunktionalität eine Verbindung mit dem externen elektronischen Schreib/Lesegerät des Geschäfts zum Bezahlen einer Rechnung aufgebaut worden ist; und
**dass** bei einer Übereinstimmung der Identifikationskennung eines Schreib/Lesegerätes des Geschäfts mit den auf das Endgerät übertragenen Suchergebnissen das Ergebnis in einem Datenarchiv der Rechnereinheit gespeichert wird.

13. Verfahren nach Anspruch 12, **dadurch gekennzeichnet, dass** der Vergleich der Identifikationskennung des Schreib/Lesegerätes des Geschäfts mit den auf das Endgerät übertragenen Suchergebnissen in einer Komparatoreinrichtung des zumindest einen Endgerätes durchgeführt wird, und dass bei einer Übereinstimmung der Identifikationskennung des Schreib/Lesegerätes mit den auf das Endgerät übertragenen Suchergebnissen das Ergebnis an die Rechnereinheit übertragen wird, oder dass während eines Bezahlvorgangs die Identifikationskennung des Schreib/Lesegerätes über eine Schnittstelle des Schreib/Lesegerätes oder über das Endgerät an die Rechnereinheit übertragen wird und dass der Vergleich der Identifikationskennung des Schreib/Lesegerätes mit den auf das Endgerät übertragenen Suchergebnissen in einer Komparatoreinrichtung der Rechnereinheit durchgeführt wird.

14. Verfahren nach einem der Ansprüche 12 oder 13, **dadurch gekennzeichnet, dass** bei Übertragung der Suchanfrage in der Rechnereinheit die Position des Endgeräts automatisch ermittelt wird, wobei in der Rechnereinheit die Suchanfrage mit Informationsdaten verglichen wird, wobei die Informationsdaten mit Positionsdaten verknüpft sind und wobei bei Übereinstimmung der Suchanfrage mit gespeicherten Informationsdaten positionsbezogene Suchergebnisse erzeugt werden, oder dass beim Erzeugen der Suchanfrage im Endgerät die Position des Endgeräts automatisch ermittelt wird, wobei bei Übertragung der Suchanfrage auch die Position des Endgeräts an die Rechnereinheit übertragen wird, wobei in der Rechnereinheit die Suchanfrage mit Informationsdaten verglichen wird, wobei die Informationsdaten mit Positionsdaten verknüpft sind, und wobei bei Übereinstimmung der Suchanfrage mit gespeicherten Informationsdaten positionsbezogene Suchergebnisse erzeugt werden.

15. Verfahren nach einem der Ansprüche 12 bis 14, **dadurch gekennzeichnet, dass** die Verbindung zwischen dem zumindest einen mobilen elektronischen Endgerät und dem externen elektronischen Schreib/Lesegerät mittels Nahfeldkommunikation erfolgt.

16. Verfahren nach einem der Ansprüche 12 bis 15, **dadurch gekennzeichnet, dass** Übereinstimmungen von Identifikationskennungen von Schreib/Lesegeräten wenigstens eines Geschäfts mit auf das Endgerät übertragenen Suchergebnissen in einem Datenarchiv der Rechnereinheit gespeichert werden.

17. Verfahren nach einem der Ansprüche 12 bis 16, **dadurch gekennzeichnet, dass** die erzeugten Suchergebnisse in einer Suchergebnisdatei dynamisch positioniert werden.
